# EUROPEAN PATENT SPECIFICATION

(11) **EP 3 693 111 B1**
(45) Date of publication and mention of the grant of the patent: **10.08.2022**
(21) Application number: 19155530.9
(22) Date of filing: 05.02.2019
(51) Int. Cl.: B23B 31/14

(54) **CHUCK ARRANGEMENT AND METHOD FOR FASTENING AND ROTATING A WORKPIECE USING SUCH CHUCK ARRANGEMENT**
SPANNFUTTERANORDNUNG UND VERFAHREN ZUM BEFESTIGEN UND DREHEN EINES WERKSTÜCKS MIT SOLCH EINER SPANNFUTTERANORDNUNG
AGENCEMENT DE MANDRIN ET PROCÉDÉ DE FIXATION ET DE ROTATION D'UNE PIÈCE DE TRAVAIL À D'UN TEL AGENCEMENT DE MANDRIN

(43) Date of publication of application: 12.08.2020
(73) Proprietor: M.P.C.-System AB, 102 40 Stockholm (SE)
(72) Inventor: SVENSSON, Bo Karl Ragnar, 114 40 STOCKHOLM (SE)
(74) Representative: Noréns Patentbyrå AB

(56) References cited:
- FR-A1- 2 540 017
- US-A- 2 950 117
- US-A- 4 387 905
- US-A1- 2006 082 075

## Description

The present invention relates to a chuck arrangement according to the preamble of claim 1, as well as to a method for fastening a workpiece according to the preamble of claim 14. In particular, the invention relates to a chuck arrangement for fastening fragile workpieces, and/or workpieces with thin material structures. The present chuck arrangement is also useful for machining of workpieces that are rotated at very high rotary speeds.

A chuck arrangement according to the preamble of claim 1 is known from US 2006/082075 A1.

Chucks are used in many applications, in particular for holding a rotating workpiece, such as in a lathe, a CNC machine or the like. In particular in CNC machines, it is of crucial importance that the chuck jaws of a chuck can be positioned and held in a predetermined position with high accuracy, in order to predictably clamp a workpiece in an intended position and with an intended pressure. In order to address this problem, solutions such as the one presented in PCT/SE2012/050839 have been presented, in which the chuck jaws are individually configurable to hold the workpiece in a particular predetermined way with high accuracy.

In particular, chucks are used for fastening workpieces of different types and qualities, and that are to be rotated for machining or other processing at different rotation speeds.

A typical type of chuck device comprises a number of chuck jaws, where each such chuck jaw is used to apply a respective predetermined radially inward directed pressing force onto the workpiece, holding it in place for rotation. Typically, there are at least three such chuck jaw, manufactured from metal material.

In general, centripetal forces affect the component parts of the chuck arrangement, such as said clamping chuck jaw parts; backing chuck jaw parts holding the clamping chuck jaw parts; and any other rotating chuck parts. Such centripetal forces will, in general, decrease the radial pressure applied to the workpiece as compared to a non-rotating state, due to the clamping chuck jaw parts being pressed radially outwards as a result of the centripetal forces.

Hence, when the chuck rotates the workpiece at higher rotational speeds, the workpiece will as a result be held less firmly by the chuck. In order to achieve a desired firm grip of the workpiece, the chuck will as a result need to be fastened more tightly when the chuck is not rotating (when at a standstill), so that the grip is sufficient when the workpiece rotates at a desired rotary velocity. This firmer grip may constitute a problem, since it risks deforming or damaging thin-walled and/or otherwise fragile workpieces.

The present invention solves this problem and offers a chuck arrangement and a method which not only lowers the risk of such deformation or damage, but which is also of simple construction achieving a cost-efficient, sturdy, user-friendly and safe usage.

Hence, the invention provides a chuck arrangement, according to claim 1, associated with a radial direction, an axial direction and an angular direction in which the chuck arrangement is arranged to rotate about said axial direction, which chuck arrangement comprises at least three chuck jaws, each arranged to, in a assembled state of said chuck arrangement, be arranged to be radially displaceable into a respective clamping position in which it applies a radial clamping force to a workpiece being held by the chuck arrangement, and wherein each chuck jaw comprises a respective chuck jaw fixing means arranged to radially fix the chuck jaw in said clamping position, wherein the chuck arrangement further comprises one respective counterweight associated with each of said chuck jaws, each of which counterweights, in said assembled state, being mechanically connected to the chuck jaw in question and associated with a respective centre of gravity which in turn, in said assembled state, is arranged so that the counterweight, via centripetal forces developed by the counterweight in question, pulls its respective associated chuck jaw in a pull direction having a non-zero component radially towards a centre of rotation of the chuck arrangement as the chuck arrangement rotates in the angular direction, wherein each one of the said counterweights comprises at least one slot for a detachable weight.

The invention also provides a method, according to claim 14, for fastening and rotating a workpiece using a chuck arrangement, which chuck arrangement is associated with a radial direction, an axial direction and an angular direction about said axial direction, which method comprises the following steps: a) arranging the chuck arrangement into an assembled state, in which at least three chuck jaws of the chuck arrangement are radially displaceable; b) radially displace said chuck jaws into said respective clamping position, in which respective clamping position each respective chuck jaw applies a radial clamping force onto the workpiece so that the workpiece is held by the chuck arrangement; c) radially fixing each of said chuck jaws in said clamping position using a chuck jaw fixing means; and d) rotating the chuck arrangement in the angular direction, about the axial direction, wherein the method further comprises, for each of said chuck jaws, providing a respective associated counterweight, each of which counterweights, in said assembled state, is mechanically connected to its associated chuck jaw in question and also associated with a respective centre of gravity which in turn, in said assembled state, is arranged so that the counterweight in question, via centripetal forces developed by the counterweight in question, pulls its associated chuck jaw in a pull direction having a non-zero component radially towards a centre of rotation of the chuck arrangement as the chuck arrangement rotates in the angular direction in step d), wherein the method further comprises providing detachable weights to slots for such detachable weights arranged in each one of the said counterweights.

In the following, the invention will be described in detail, with reference to exemplifying embodiments of the invention and to the enclosed drawings, wherein:
Figure 1 is a perspective view from above of a chuck arrangement according to the present invention;
Figure 2 is the perspective view shown in Figure 1, but with a clamping chuck jaw part removed;

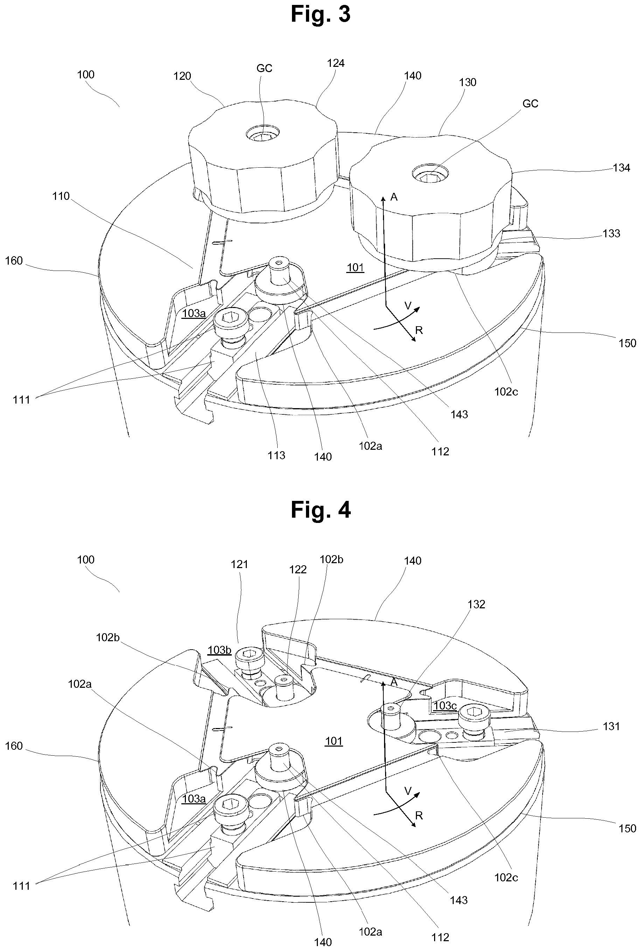

Figure 3 is the perspective view shown in Figure 2, but with a backing chuck jaw part also removed;
Figure 4 is the perspective view shown in Figure 3, but with all backing and clamping chuck jaw parts removed;
Figure 5 is the perspective view shown in Figure 4, but also with a counterweight and a number of details removed;
Figure 6 is a perspective view from below of a set of three counterweights of the chuck arrangement viewed in Figure 1;
Figure 7 is the perspective view shown in Figure 6, but with one of the three counterweights removed;
Figure 8 is the perspective view shown in Figure 6, but with two of the three counterweights removed;
Figure 9 is a perspective view from above of the chuck arrangement shown in Figure 1, but with a horizontal cross-section removed, which cross-section is perpendicular to an axial direction of the chuck arrangement;
Figure 10 is a perspective view from above of a set of one chuck jaw and an associated counterweight of the chuck arrangement shown in Figure 1;
Figure 11 is a perspective view from below of the set shown in Figure 10;
Figure 12 is a perspective view from the side of the set shown in Figure 10, with a vertical cross-section removed, which cross-section is taken along an axial direction and a radial direction of the chuck arrangement;
Figure 13 is a perspective view from the side of the chuck arrangement shown in Figure 1, with a vertical cross-section, parallel to a plane spanned by said radial and axial directions, removed, which vertical cross-section passes through two chuck jaws of said chuck arrangement;
Figure 14 is a perspective view from below of a partly removed chuck jaw of the chuck arrangement illustrated in Figure 2; and
Figure 15 illustrates a method according to the invention.

Throughout the Figures, the same reference numbers are used to denote same parts.

It is realized that the Figures relate to various aspects of one single, detailed example. However, as will be apparent from the description below, numerous aspects may be varied in different ways. Hence, this single example shown in the Figures should not be construed as limiting,, but rather as illustrative.

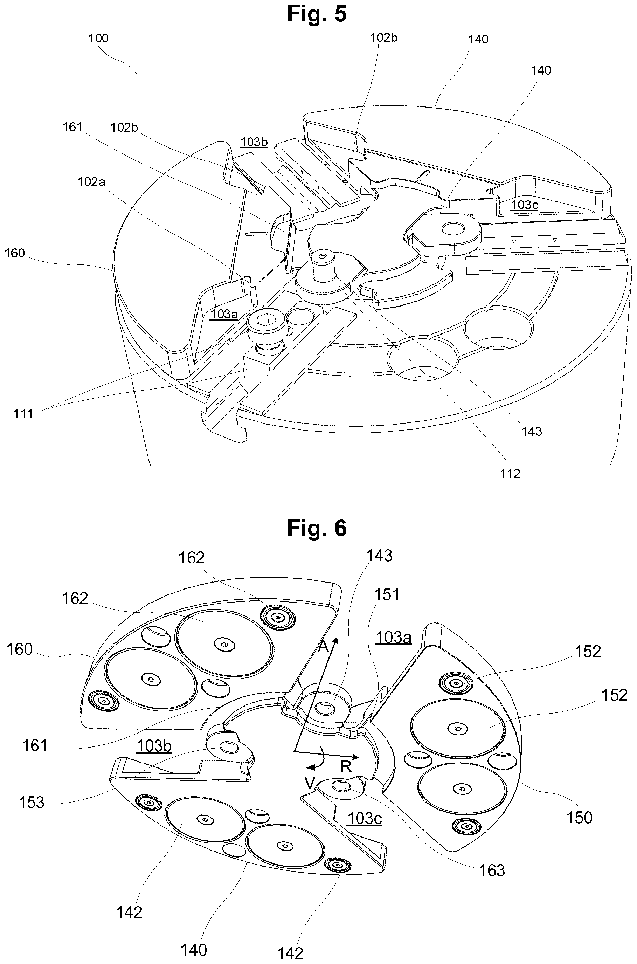

In the Figures, a chuck arrangement 100 is illustrated. The chuck arrangement 100 is associated with a radial direction R, an axial direction A and an angular direction V. The angular direction V denotes an angular direction about an axis running in said axial direction A. Even if drawn in various places in the different Figures (for reasons of clarity), it is understood that such an axis may be a centre axis of rotation for the chuck arrangement 100, located within the space defined between the clamping chuck jaw parts 114, 124, 134 (see below). Such an centre axis of rotation may pass through a centre of gravity for the whole chuck arrangement 100. In Figure 6, the axis direction A is drawn in a location which roughly corresponds to a radially correct positioning of this centre axis of rotation for the chuck arrangement 100.

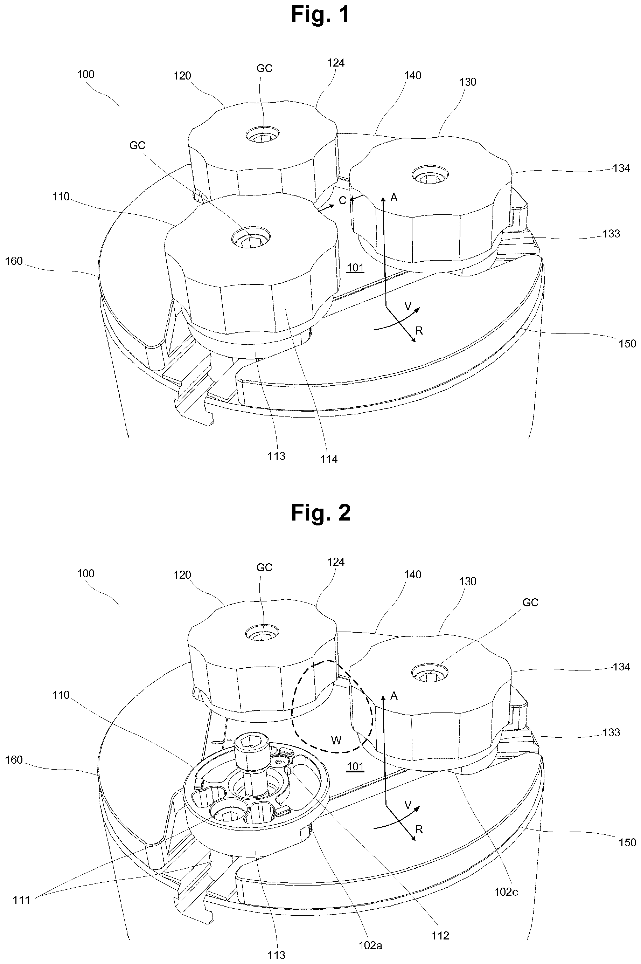

Hence, the chuck arrangement 100 is arranged to rotate about said centre axis of rotation, running in said axial direction A. In Figure 1, an "upwards" axial direction is also an upwards direction in the Figure.

Moreover, the chuck arrangement 100 comprises at least three chuck jaws 110, 120, 130. The chuck arrangement 100 is also associated with an assembled state, illustrated in Figure 1. In this assembled state of said chuck arrangement 100, said chuck jaws 110, 120, 130 are arranged to be displaceable in said radial direction R into a respective clamping position, in which clamping position each such respective chuck jaw 110, 120, 130 applies a respective radial clamping force C to a workpiece W (see Figure 2, in which such a workpiece W is loosely shown in broken lines) being held by the chuck arrangement 100. These respective radial force C applied from each of said chuck jaws 110, 120, 130 together hold the workpiece W in position, in a way which is conventional as such and well-known for the person skilled in the art of chuck arrangements. In general, the clamping force will be specifically adapted for the particular type of workpiece W.

As will be explained in further detail below, however, the chuck arrangement 100 according to the present invention is particularly well-suited for holding workpieces W using only relatively small maximum radial clamping forces C.

It is realized that there may be more than three chuck jaws 110, 120, 130, such as four chuck jaws. However, it is preferred to use an uneven number of chuck jaws, such as three, five or seven chuck jaws, so that each one of the below-described counterweights 140, 150, 160 being associated with a particular chuck jaw can be arranged between a pair of oppositely arranged chuck jaws.

This will also make it possible to configure the chuck arrangement 100 with its total centre of gravity along said centre axis of rotation, and hence provide a well-balanced chuck arrangement 100. This is the preferred case.

Furthermore, each chuck jaw 110, 120, 130 comprises a respective chuck jaw fixing means 111, 121, 131, arranged to radially fix the chuck jaw 110, 120, 130 in said clamping position in relation to the rest of the chuck arrangement 100.

In the example illustrated in the Figures, each chuck jaw fixing means 111, 121, 131 comprises a radially movable block, which is radially movable in a track. The track may be provided as a part of a cylindrical chuck arrangement 100 support. To the movable block, a respective backing chuck jaw part 113, 123, 133 is arranged to be fastened using a respective screw, and which block supports the backing chuck jaw part 113, 123, 133 in question as the chuck jaw 110, 120, 130 in question moves radially with the movable block. The same screw may also be used to fix the radially movable block radially in said track, such as by the screw being arranged to, when tightened, press a metal surface of the movable block against a corresponding metal surface of the track. Hence, in this case the chuck jaw fixing means 111, 121, 131 also comprises a radially slidable engagement means, arranged to allow the chuck jaw 110, 120, 130 in question to radially move into said clamping position. However, it is realized that such radially slidable engagement means may alternatively be separately provided.

According to the present invention, the chuck arrangement 100 further comprises one respective counterweight 140, 150, 160 associated with each of said chuck jaws 110, 120, 130. Hence, each chuck jaw 110, 120, 130 is associated with one respective individual counterweight 140, 150, 160. In said assembled state, each of said counterweights 140, 150, 160 is mechanically connected to its respective associated chuck jaw 110, 120, 130 in question. In the Figures, chuck jaw 110 is associated with counterweight 140; chuck jaw 120 is associated with counterweight 150; and chuck jaw 130 is associated with counterweight 160.

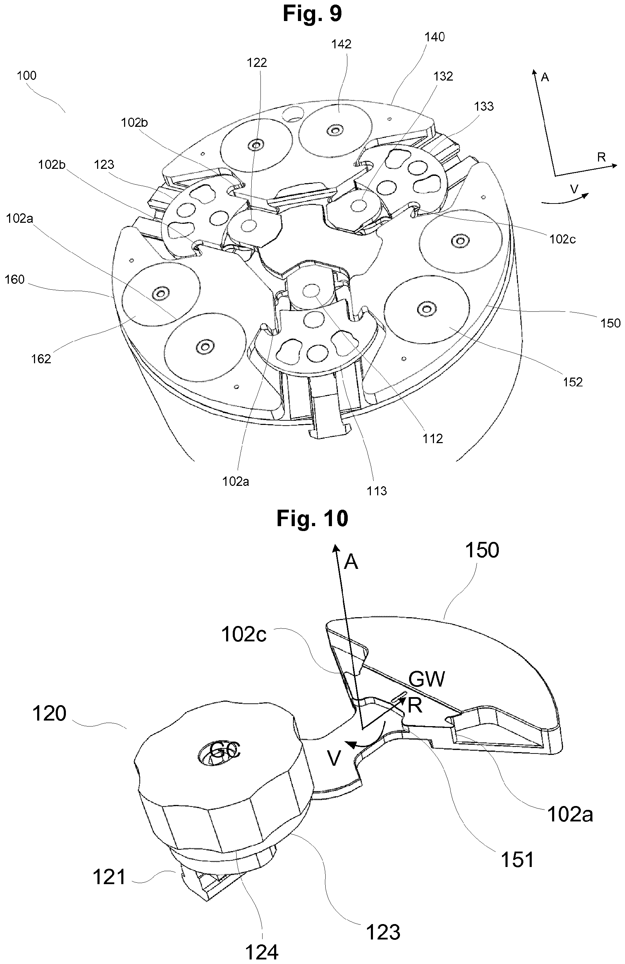

Furthermore, each of said counterweights 140, 150, 160 has a respective centre of gravity GW (see Figure 10, in which the centre of gravity GW is indicated, roughly in the correct radial position, for the counterweight 150). This centre of gravity GW, in turn, is arranged so that, in said assembled state, the counterweight 140, 150, 160 in question, via centripetal forces developed by the counterweight 140, 150, 160, pulls its respective associated chuck jaw 110, 120, 130 in a pull direction having a non-zero component radially towards said centre axis of rotation of the chuck arrangement 100 as the chuck arrangement 100 rotates in the said angular direction V.

That the pull direction has a non-zero component radially towards the centre axis of rotation means that, in a R/A/V coordinate system with the centre axis of rotation at the radial zero, the pulling direction can be defined in terms of a radial, an angular and an axial component, and that such a radial component is non-zero and directed towards the radial zero. In other words, the pulling force achieved by the counterweight when the chuck arrangement 100 rotates is directed inwards to at least some degree.

One important special case is that the pull direction, in a plane perpendicular to the axial direction A, is directed completely radially, since this leads to a well-balanced overall chuck assembly 100. It may even be so that the said pulling force is entirely radially inwards directed, without any axial or angular component.

In other words, as the chuck arrangement 100 rotates about said centre axis of rotation, each chuck jaw 110, 120, 130 will be pulled radially away from this centre axis of rotation, due to centripetal forces developed as a result of said rotation. The invention specifies that each such chuck jaw 110, 120, 130 is associated with a respective counterweight 140, 150, 160 which is mechanically connected to its respective associated chuck jaw 110, 120, 130 and pulls it in the opposite radial direction as a result of the centre of gravity GW of the counterweight 140, 150, 160 being located at a radially opposite side of the said centre axis of rotation as compared to a centre of gravity GC of the chuck jaw 110, 120, 130 in question. As a result, the centripetal forces developed by the counterweight 140, 150, 160 due to such rotation will counteract the centripetal forces developed by the chuck jaw 110, 120, 130 itself.

As the chuck arrangement 100 holding the workpiece W rotates, the centripetal forces acting on the chuck jaws 110, 120, 130 increase with increasing rotary velocities. Since the centre of gravity GC is arranged at a respective radial distance from the central axis of rotation, these centripetal forces result, all other things being equal, in a decreased clamping gripping force onto the workpiece W. However, due to the counteracting centripetal forces resulting from the counterweights 140, 150, 160, this decreased gripping force is balanced by an increased clamping gripping force provided via the counterweights 140, 150, 160.

With a conventional chuck arrangement, a clamping gripping force at standstill needs be selected with sufficient margin so that the workpiece W grip is not allowed to be too loose at a desired rotary velocity. For fragile and/or thin-walled workpieces, this may lead to workpiece W damage at rotary standstill. Using the present invention, a clamping gripping force at standstill can be selected with a smaller, or even non-existing, margin.

According to certain embodiments, each counterweight 140, 150, 160 may be arranged to, in said assembled state of the chuck arrangement 100, be detachably engaged with its respective associated chuck jaw 110, 120, 130. In particular, such a detachable engagement is arranged to prevent each counterweight 140, 150, 160 to move radially away from its associated chuck jaw 110, 120, 130, and in particular as the chuck arrangement 100 rotates in the angular direction V.

The detachable engagement may have any suitable constitution, but the inventors have discovered that a solution of the principal type disclosed in the Figures provide a simple yet robust and safe arrangement. In such an engagement, the chuck jaw 110, 120, 130 may be arranged with a sprint 112, 122, 132, which sprint 112, 122, 132 is then arranged to engage with a corresponding hole 143, 153, 163 in the respective associated counterweight 140, 150, 160. The hole 143, 153, 163, which may be a through hole, may run in the axial direction A so as to prevent radial relative movement of the counterweight 140, 150, 160 away from the chuck jaw 110, 120, 130.

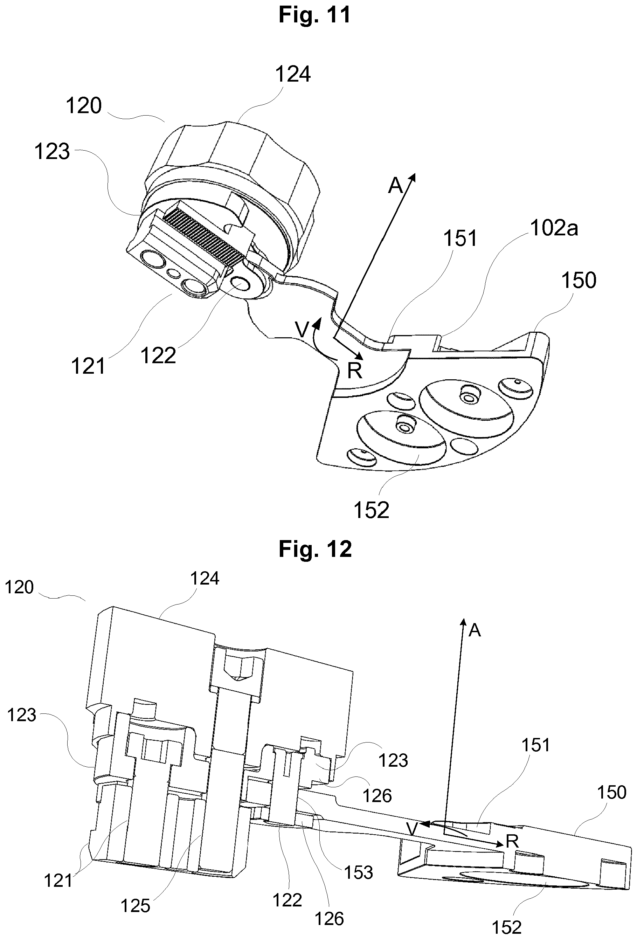

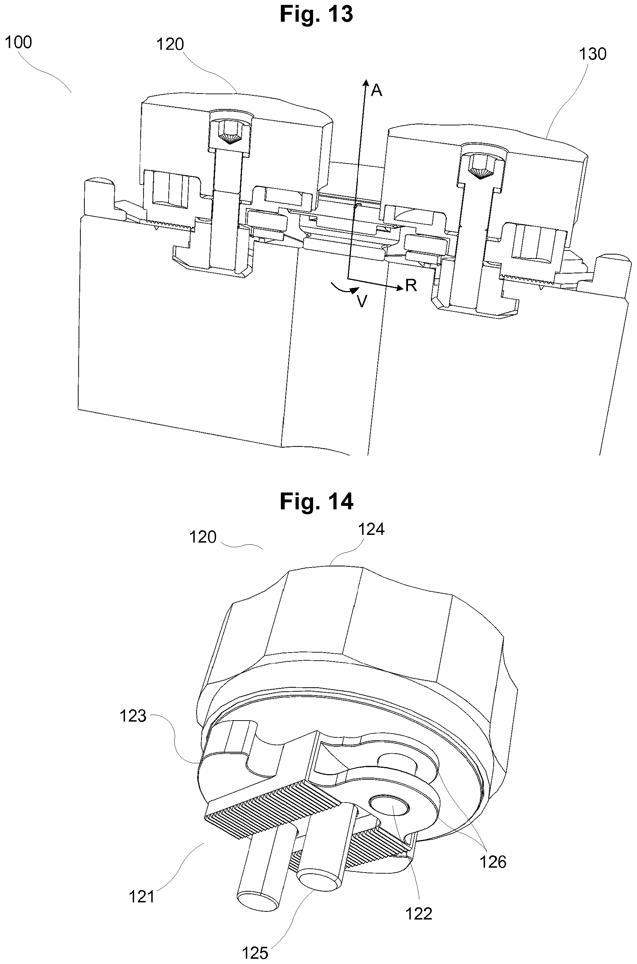

As is best illustrated in Figures 12 and 14, such a sprint 122 may be arranged to run through a corresponding through hole, and in particular through a couple of through holes, arranged in respective flanges 126 of the chuck jaw 120 in question. The flanges 126 may be arranged on either axial sides of the through hole 153, with substantially no axial play therebetween. This provides good stability.

Furthermore, the position of the sprint 122 may be axially secured by the backing chuck jaw part 123 and/or the clamping chuck jaw part 124 in question being fastened, using said chuck jaw fixing means 121 and/or a clamping chuck jaw part 124 fixing means 125, such as a screw arranged to fix the rotary and axial position of the clamping chuck jaw part 124. Such fixing means 121, 125 may then also, by suitably designed force application points, fix the axial location of the sprint 122, for instance as illustrated in the Figures by pressing the clamping chuck jaw part 124 towards a lower support for the sprint 122 (such as the above mentioned chuck arrangement 100 support), with the sprint 122 arranged to abut both the clamping chuck jaw part 124 and the lower support structure in question.

As is illustrated in the Figures, and in particular in Figures 12 and 14, a radial pulling force resulting from the centripetal forces developed by the counterweight 150, is radially transferred by the sprint 122 and the backing chuck jaw part 123 (and in particular, by the upper one of said flanges 126) to the clamping chuck jaw part 124. The radial forcetransferring sprint 122 being arranged radially closer to the centre axis of rotation of the chuck arrangement 100 than an engagement point of the fixing means 125 fixing the radial position of the clamping chuck jaw part 124 in relation to the rest of the chuck arrangement 100, an effective centripetal force balancing can be achieved. The corresponding applies also to the other chuck jaws and counterweights.

In some embodiments, each one of said chuck jaws 110, 120, 130 is associated with a certain respective opposite chuck pair plane, extending in parallel to the axial direction A and comprising the respective centres of gravity GC of two other chuck jaws 110, 120, 130 than the one in question. Figure 13 illustrates the chuck pair plane associated with the chuck jaw 110, which chuck pair plane comprises the respective centres of gravity GC of the chuck jaws 120, 130. It is realized that the cross-sectional plane which is removed in Figure 13 only roughly represents the correct location of the chuck pair plane in relation to said centres of gravity GC, and that it is intended mainly for illustrative purposes.

Then, for each of said chuck jaws 110, 120, 130 and in said assembled state of the chuck arrangement 100, the respective associated counterweight 140, 150, 160 is arranged to extend from the chuck jaw 110, 120, 130 in question, past the said opposite chuck pair plane of the chuck jaw 110, 120, 130 in question, and to an opposite side of said chuck pair plane where its centre of gravity GW is arranged. Hence, the centre of gravity GC of each chuck jaw 110, 120, 130 and the centre of gravity GW of the associated respective counterweight 140, 150, 160 in question will be arranged on opposite sides of both the central axis of rotation of the chuck arrangement 100 and of the respective chuck pair plane in relation to each other. Further, the counterweight 140, 150, 160 in question may extend between the chuck jaws arranged along the opposite chuck pair plane in question, in said assembled state of the chuck arrangement 100.

In order to achieve this, the counterweights 140, 150, 160 may be designed, as is illustrated in the Figures, with a wider angular-direction V and/or axial-direction A cross-sectional size which generally grows in the outward radial direction R, so that a majority of the mass of each counterweight 140, 150, 160 is located at a distant side of said respective opposite chuck pair plane in relation to the associated respective chuck jaw 110, 120, 130. Providing a majority of the mass of the counterweights 140, 150, 160 along a radial periphery of the chuck arrangement 100 will also result in that the counterweights 140, 150, 160 can have a lower weight and still be effective in counterbalancing the centripetal forces as described above. In fact, each detachable counterweight 140, 150, 160 part may be designed with a lower total weight than its associated detachable chuck jaw 110, 120, 130 part.

Each of the detachable counterweight 140, 150, 160 parts may have identical total masses. Each of the detachable chuck jaw 110, 120, 130 parts may also have identical total masses (but which is different from the said total mass of each of the detachable counterweights 140, 150, 160).

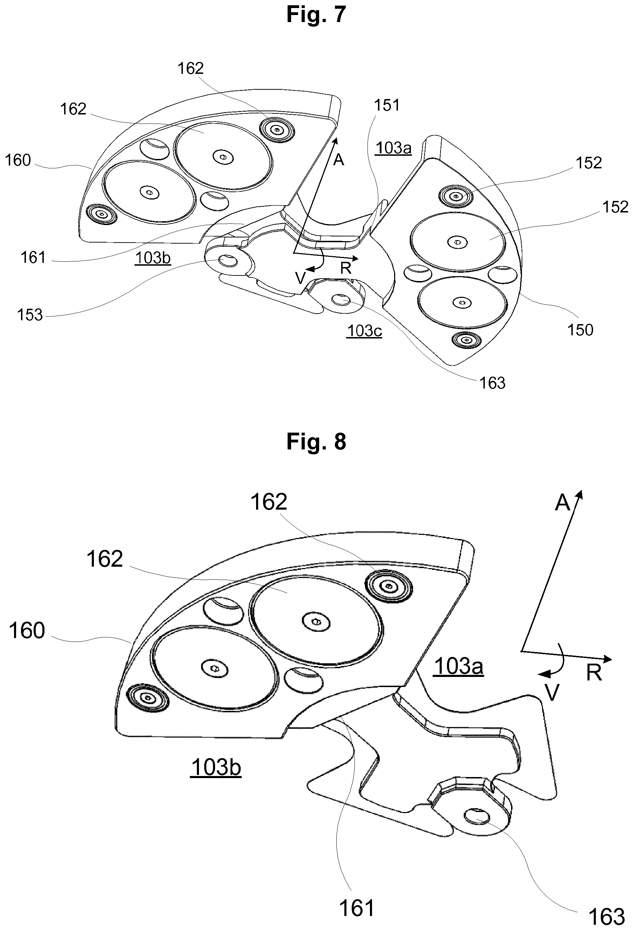

In some embodiments, the chuck arrangement 100 is arranged so that, in said assembled state, all counterweights 140, 150, 160 have respective weight distributions that are substantially identical in said radial direction R. In particular, the respective weight distribution of the counterweights 140, 150, 160 may at least be identical across a radial R interval in which the counterweights 140, 150, 160 do not have any axial A overlap. In fact, and as is illustrated in the Figures (see in particular Figures 6-8), the chuck arrangement 100 may be arranged so that, in said assembled state, the geometric shapes of the counterweights 140, 150, 160 may be substantially identical apart from offsets 141, 151, 161 in the axial direction A in, or in connection to, regions of axial overlap between the counterweights 140, 150, 160, in particular in a radially central region of the assembled chuck arrangement 100 radially defined by the clamping chuck jaw parts 114, 124, 134.

Such axial offsets 141, 151, 161 may be arranged so that, in areas of regional axial overlap between the counterweights 140, 150, 160 in said radially central parts of the assembled chuck arrangement 100, each counterweight 140, 150, 160 occupies a respective space located at different axial positions, so that the counterweights 140, 150, 160 do not interfere geometrically with each other. It is noted that such axial offsets, in particular when shaped as axial steps of an otherwise flat plate-shaped body, do not substantially affect the radial-direction weight distribution of each counterweight 140, 150, 160.

In said radially central area of overlap, the counterweights 140, 150, 160 may be in direct contact with each other, via axially facing abutment surfaces.

As is illustrated in the Figures, the counterweights 140, 150, 160 may be arranged entirely axially below the clamped workpiece W in the assembled state of the chuck arrangement 100.

In particular, and as is shown in the Figures, the counterweights 140, 150, 160 may be jointly shaped so that, in said assembled state of the chuck arrangement 100, they together form a substantially flat surface 101, which surface 101 is perpendicular to the axial direction A. Such a flat surface 101 may face towards the clamped workpiece W.

In some embodiments, a first and a second one of the said counterweights 140, 150, 160 may be jointly shaped so that, in said assembled state of the chuck arrangement 100, they together form a respective radial support structure 102a, 102b, 102c for a respective chuck jaw 110, 120, 130 associated with a different third one of said counterweights 140, 150, 160. See, for instance, Figure 9, where counterweights 140 and 160 form a radial support structure 102b for the chuck jaw 120.

Such a radial support structure 102b is arranged to engage with said chuck jaw 120 associated with said third one of said counterweights 150, and to as a result of this engagement limit the radial freedom of movement of this chuck jaw 120 away from the centre of gravity GW of the said third counterweight 150. The corresponding may, of course, be the case also for the other chuck jaws 110, 130.

Such radial support structures 102a, 102b, 102c, that may be formed as radially extending projections or fingers arranged to engage with corresponding indentations in the backing chuck jaw part 113, 124, 134, as illustrated in the Figures, or that may be formed in any other suitable manner, will provide a simple yet effective safety mechanism, preventing chuck jaws 110, 120, 130 from accidentally coming loose at high rotary velocities of the chuck arrangement 100. This is achieved without the chuck arrangement 100 construction being negatively affected in terms of complexity, weight distribution and so forth.

The radial support structure 102a, 102b, 102c may be formed as a contour shape of the counterweight 140, 150, 160 in a plane perpendicular to the axial direction A. Furthermore, the radial support structure 102a, 102b, 102c may be arranged to engage with a corresponding radial support structure (such as the said indentations) of the backing chuck jaw part 113, 123, 133, comprising a corresponding contour shape of the backing chuck jaw part 113, 123, 133 in the same plane.

As mentioned above, each chuck jaw 110, 120, 130 may comprise a respective radially displaceable (in relation to the chuck arrangement 100) backing chuck jaw part 113, 123, 133 and a respective clamping chuck jaw part 114, 124, 134. In general in this case, in said assembled state of the chuck arrangement 100, the respective backing chuck jaw part 113, 123, 133 may be mechanically connected (and preferably directly mechanically connected) to the counterweight 140, 150, 160 associated with the chuck jaw 110, 120, 130 in question.

In particular, and as illustrated in the Figures, each of the clamping chuck jaw parts 114, 124, 134 may be arranged to be axially rotatable in relation to its corresponding backing chuck jaw part 113, 123, 133. Each clamping chuck jaw part 114, 124, 134 may be provided with a varying radius as seen in a plane perpendicular to the axial direction A, offering different clamping radii depending on a current rotation position of the clamping chuck jaw part 114, 124, 134 in question, this is conventional as such, but it is preferred in the present context that the freedom of rotary movement of the clamping chuck jaw part 114, 124, 134 when not fixed (using a fixing screw or similar) is mechanically unaffected, or at least not completely removed) by the engagement between the associated counterweight 140, 150, 160 and the chuck jaw 110, 120, 130 in question. For instance, this may be achieved by the said engagement being between the backing chuck jaw part 113, 123, 133 and the corresponding counterweight 140, 150, 160, as described above.

Furthermore, the radial displaceability of the chuck jaw 110, 120, 130 in relation to the chuck arrangement 100 may preferably be mechanically unaffected (or at least not completely removed) by the engagement between the chuck jaw 110, 120, 130 and its associated counterweight 140, 150, 160. This may, for instance, be achieved by this engagement only being provided between the chuck jaw 110, 120, 130 in question and the counterweight 140, 150, 160 in question, and by the chuck jaw + counterweight aggregate (illustrated in Figure 11) being shaped so that a certain radial direction R play is present between the said aggregate and the rest of the chuck arrangement 100 in said mounted state, but before the chuck jaw 110, 120, 130 in question has been radially fixed in relation to the chuck arrangement using the fixing means 111, 121, 131.

In order to achieve a compact, simple yet robust design, a first and a second one of said counterweights 140, 150, 160 may be pairwise shaped so that, in said assembled state of the chuck arrangement 100, they together form an opening 103a, 103b, 103c, in a plane perpendicular to the axial direction A. Then, this opening 103a, 103b, 103c may be arranged to receive and accommodate a backing chuck jaw part 112, 123, 133 belonging to a respective chuck jaw 110, 120, 130 associated with a different third one of said counterweights 140, 150, 160. For instance, the opening 103a being jointly formed by the respective shapes (in said plane) of counterweights 150 and 160 is arranged to receive and accommodate the chuck jaw 110.

In particular, it may be the respective backing chuck jaw part 113, 123, 133 which can be at least partly received and accommodated in said opening 103a, 103b, 103c, so that there is a certain radial direction overlap between the said backing chuck jaw part 113, 123, 133 and the corresponding opening 103a, 103b, 103c.

The opening 103a, 103b, 103c, being formed as a contour shape of the said counterweights 140, 150, 160 in said plane perpendicular to the axial direction A, may comprise said radial support structures 102a, 102b, 102c as a part of said contour shape.

The opening 103a, 103b, 103c may be shaped so that is provides a certain play, in said plane, for the accommodated chuck jaw 110, 120, 130 in said assembled state of the chuck arrangement 100, in particular a radial such play. The opening 103a, 103b, 103c may be radially open in a radially outwards direction.

In correspondence to the discussion above regarding the radial mass distribution of the counterweights 140, 150, 160, in case openings 103a, 103b, 130c of the said type are used, a majority of the mass of the counterweights 140, 150, 160, and in particular of said first and second counterweights 140, 150, 160, may be allocated radially at or beyond a maximum radial extension of said opening 103a, 103b, 103c.

The counterweights 140, 150, 160, and in general the whole chuck arrangement 100, may be made from metal material such as stainless steel and/or aluminium. In particular, the clamping chuck jaw parts 114, 124, 134 may be made from aluminium, whereas it is preferred that the rest of the chuck arrangement 100 parts are made from steel. The clamping chuck jaw parts 114, 124, 134 may be made from a softer metal material than the backing chuck jaw parts 113, 123, 133.

However, in order to further increase the mass along the radial periphery of the counterweights 140, 150, 160 in said assembled state, and further to be able to vary the developed balancing centripetal forces depending on a desired rotary velocity and/or different used chuck jaw 110, 120, 130 types and/or for machining of different types of workpieces W, each one of the said counterweights 140, 150, 160 comprises at least one slot for a detachable weight 142, 152, 162. Then, such weights 142, 152, 162 may or may not be installed, and be provided with varying masses, depending on current needs, such as by using different metal materials and/or shapes for the weights 142, 152, 162. In Figures 6-8, the weights 142, 152, 162 are shown, while in Figure 11 only the corresponding slots are shown. Such slots may be in the form of axially arranged non-through holes in the counterweights 140, 50, 160, such as with an opening in a lower face of the counterweight 140, 150, 160, facing away from the workpiece W in said assembled state.

Each slot may further be arranged with suitable fastening means for securing a respective weight 142, 152, 162 in the slot, such as a screw hole. However, in the case shown in the Figures, where the fixing of the chuck jaws 110, 120, 130 secures the axial position of the counterweights 140, 150, 160 and the slots are arranged on the axial underside of the counterweights 140, 150, 160, the weights 142, 152, 162 may be axially fixed by an upper chuck arrangement surface on which the counterweights 140, 150, 160 rest (such as the support mentioned above, rotating with the chuck arrangement 100). In this case, it is possible to completely omit such fastening means.

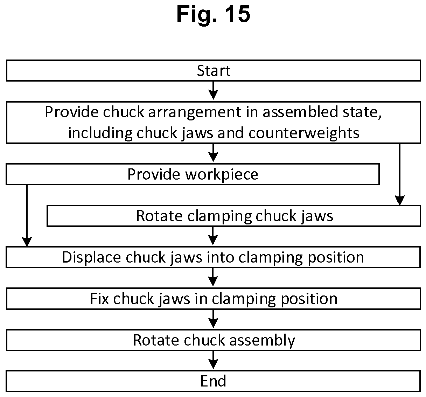

Figure 15 illustrates a method according to the present invention, for fastening and rotating a workpiece W using a chuck arrangement 100 of the present type and as described herein.

In a first step, the method starts.

In a subsequent step, the chuck arrangement 100 is arranged or assembled into said assembled state as shown in Figure 1, in which assembled state said at least three chuck jaws 110, 120, 130 of the chuck arrangement 100 each are radially displaceable, as has been described above. Specifically, this radial displaceability may be provided by the block of the fixing means 111, 121, 131 being slidable in a channel of a support comprised in the chuck arrangement 100. As perhaps best shown in Figure 11, a lower side of the backing chuck jaw part 113, 123, 133 may be provided with grooves (being perpendicular to the radial direction R) arranged to cooperate with corresponding grooves on said support surface, so that the radial position of the backing chuck jaw 113, 123, 133 is adjustable in predetermined increments defined by said grooves.

As a part of this step, for each of the chuck jaws 110, 120, 130, a respective associated counterweight 140, 150, 160 is provided as described above, for instance by engaging the chuck jaw 110, 120, 130 in question with its associated counterweight 140, 150, 160 using said sprint 112, 122, 132.

It is understood that, in the mounted state of the chuck arrangement thus achieved, the chuck jaws 110, 120, 130 are still radially displaceable into and out of said clamping position, which clamping position may be different for different workpieces W. In the assembled position, it is also preferred that the clamping chuck jaw parts 114, 124, 134 are rotatable as described above.

In a subsequent step, the workpiece W may be provided in the above described manner.

In a subsequent step, the chuck jaws 110, 120, 130 are radially displaced into said respective clamping position, in which respective clamping position each respective chuck jaw 110, 120, 130 applies said radial clamping force onto the workpiece W so that the workpiece W is securely held by the chuck arrangement 100. This step may also involve rotating the clamping chuck jaw parts 114, 124, 134 into a desired rotational position as described above.

In a subsequent step, each of the chuck jaws 110, 120, 130 are fixed in said clamping position using the chuck jaw fixing means 111, 121, 131. In this or a previous step, a respective rotational position of the clamping chuck jaw parts 114, 124, 134 may also be similarly fixed, using fixing means 125.

In a subsequent step, the chuck arrangement 100 is rotated in the said angular direction V, about the axial direction A (and more precisely about the central axle of rotation as described above). This rotation may be performed by an electrical motor in a way which is conventional as such. As described above, during this rotation, the centripetal forces developed by the counterweights 140, 150, 160 counteract, partly or completely, oppositely-directed centripetal forces developed by the chuck jaws 110, 120, 130.

The chuck arrangement 100 according to the present invention is suitable for use with high rotation velocities, even for fragile and/or thin-walled workpieces W. For instance, even at rotation velocities of 2000 RPM or more, such as more than 5000 RPM or more, it is possible to hold such fragile and/or thin-walled workpieces in a secure manner without any workpiece W damage.

It is generally preferred that the present chuck arrangement 100 is used with standstill gripping forces (the gripping force applied by each chuck jaw 110, 120, 130 in a non-rotating state of the chuck arrangement 100) that are at the most 40 kN, or even at the most 20 kN.

In particular, the present invention makes it possible to combine relatively weak such standstill gripping forces with rotation velocities that are higher than what is allowed in corresponding situations using conventional chuck arrangements, without jeopardizing safety or production quality. Hence, for applications with standstill gripping forces of 60 kN or less, such as 40 kN or less, rotation velocities of 4000 RPM or more are possible. With standstill gripping forces of 30 kN or less, rotation velocities of 2500 RPM or more are possible. With standstill gripping forces of 20 kN or less, such as even 15 kN or less,, rotation velocities of more than 1500 RPM are possible.. The present inventors foresee that it may even be possible in some applications to perform machining with standstill gripping forces of less than 20 kN in combination with rotation velocities of more than 4000 RPM.

For non-fragile workpieces, the present chuck arrangement 100 can be used at rotation velocities of even more than 6000 RPM, or even more than 8000 RPM, and still provide adequate gripping forces during rotation.

All of the above provided exemplifying combinations of intervals constitute possible respective operation prerequisites for the present invention.

In order to avoid damage to such fragile and/or thinned workpieces W, it is preferred that, in said respective clamping position at standstill, no one of the chuck jaws 110, 120, 130 applies a radial clamping force to the workpiece W of more than 10 kN, and in some applications at the most 100 kN. It is furthermore preferred that a difference between a clamping force at standstill and a clamping force at a desired machining rotation speed is less than 25%. This maximum difference is achieved by a suitable combination of the weight and weight distribution of the chuck jaw as well as of the counterweight, and also the selection of said desired machining rotation speed.

In order to achieve a proper counter balance of said centripetal forces, in a method step according to the present invention performed before the assembled state is reached, a total mass and/or a centre of gravity GW of each of said counterweights 140, 150, 160 is selected so that, in the step in which the chuck arrangement 100 is rotated, centripetal forces developed by each of the counterweights 140, 150, 160 and its respective associated chuck jaw part 110, 120, 130 substantially balance when the chuck arrangement 100 rotates in the angular direction V. This mass and/or centre of gravity selection may, for instance, be performed using detachable weights 142, 152, 162 as described above. Above, preferred embodiments have been described. However, it is apparent to the skilled person that many modifications can be made to the disclosed embodiments without departing from the invention.

Hence, as described above, the chuck arrangement 100 illustrated in the Figures represents one possible detailed embodiment of the present invention. Individual feature parts may be modified while still being covered by the protective scope defined by the independent claims. In particular, additional features may be incorporated to the chuck arrangement, not being shown in the Figures.

As also mentioned above, it is possible to use the inventive features with chuck assemblies comprising more than three chuck jaws.

In general, everything which has been said in relation to the chuck arrangement is equally applicable to the method, and vice versa.

Hence, the invention is not limited to the described embodiments, but can be varied within the scope of the enclosed claims.

## Claims

1. Chuck arrangement (100) associated with a radial direction (R), an axial direction (A) and an angular direction (V) in which the chuck arrangement (100) is arranged to rotate about said axial direction (A), which chuck arrangement (100) comprises at least three chuck jaws (110,120,130), each arranged to, in a assembled state of said chuck arrangement (100), be arranged to be radially displaceable into a respective clamping position in which it applies a radial clamping force (C) to a workpiece (W) being held by the chuck arrangement (100), and wherein each chuck jaw (110,120,130) comprises a respective chuck jaw fixing means (111,121,131) arranged to radially fix the chuck jaw (110,120,130) in said clamping position wherein the chuck arrangement (100) further comprises one respective counterweight (140,150,160) associated with each of said chuck jaws (110,120,130), each of which counterweights (140,150,160), in said assembled state, being mechanically connected to the chuck jaw (110,120,130) in question and associated with a respective centre of gravity (GW) which in turn, in said assembled state, is arranged so that the counterweight (140,150,160), via centripetal forces developed by the counterweight (140,150,160) in question, pulls its respective associated chuck jaw (110,120,130) in a pull direction having a non-zero component radially towards a centre of rotation of the chuck arrangement (100) as the chuck arrangement (100) rotates in the angular direction (V), **characterised in that** each one of the said counterweights (140,150,160) comprises at least one slot for a detachable weight (142,152,162).

2. Chuck arrangement (100) according to claim 1, **characterised in that** said slots are in the form of axially arranged non-through holes in said counterweights (140, 150, 160).

3. Chuck arrangement (100) according to claim 2, **characterised in that** said non-through holes have a respective opening in a lower face of the respective counterweight (140,150,160), facing away from the workpiece (W) in said assembled state.

4. Chuck arrangement (100) according to any one of the preceding claims, **characterised in that** each one of said slots is further arranged with fastening means for securing a respective weight (142,152,162) in the slot in question.

5. Chuck arrangement (100) according to any one of claims 1-3, **characterised in that** said chuck jaws (110,120,130) are arranged to secure the axial (A) position of said counterweights (140,150,160), **in that** said slots are arranged on an axial (A) underside of the counterweights (140,150,160), **in that** said weights (142,152,162) are arranged to be axially (A) fixed by an upper chuck arrangement (100) surface on which the counterweights (140,150,160) rest.

6. Chuck arrangement (100) according to claim 5, **characterised in that** the slots are not provided with any fastening means for securing a respective weight (142,152,162) in the slot in question.

7. Chuck arrangement (100) according to any one of the preceding claims, **characterised in that** said slots are arranged so that, by providing the slots with said detachable weights (142,152,162), the mass is increased along a radial periphery of the counterweights (140,150,160) in said assembled state.

8. Chuck arrangement (100) according to any one of the preceding claims, **characterised in that** each counterweight (140,150,160) is arranged to, in said assembled state, be detachably engaged with its respective associated chuck jaw (110,120,130), such as via a sprint (112,122,132) of the chuck jaw (110,120,130) arranged to engage with a corresponding hole (143,153,163) in the counterweight (140,150,160).

9. Chuck arrangement (100) according to any one of the preceding claims, **characterised in that** each one of said chuck jaws (110,120,130) is associated with a certain respective opposite chuck pair plane, running in parallel to the axial direction (A) and comprising the respective centres of gravity (GC) of two other chuck jaws (110,120,130), **in that**, for each of said chuck jaws (110,120,130) and in said assembled state, the respective associated counterweight (140,150,160) is arranged to extend from the chuck jaw (110,120,130) in question, past the chuck jaw pair plane of the chuck jaw (110,120,130) in question, and to an opposite side of said chuck jaw pair plane where its centre of gravity (GW) is arranged.

10. Chuck arrangement (100) according to claim 9, **characterised in that**, in said assembled state, the said counterweights (140,150,160) have respective weight distributions that are substantially radially identical.

11. Chuck arrangement (100) according to any one of the preceding claims, **characterised in that** each of said chuck jaws (110,120,130) comprises a respective radially displaceable backing chuck jaw part (113,123,133) and a respective clamping chuck jaw part (114,124,134), and **in that**, in said assembled state, the respective backing chuck jaw part (113,123,133) is mechanically connected to the counterweight (140,150,160) associated with the chuck jaw (110,120,130) in question.

12. Chuck arrangement (100) according to claim 11, **characterised in that** a first and a second of said counterweights (140,150,160) are shaped so that, in said assembled state, they together form an opening (103a,103b,103c), in a plane perpendicular to the axial direction (A), which opening (103a,103b,103c) is arranged to receive a backing chuck jaw part (112,123,133) belonging to a chuck jaw (110,120,130) associated with a third one of said counterweights (140,150,160).

13. Chuck arrangement (100) according to claim 12, **characterised in that** a majority of the mass of the said first and second counterweights (140,150,160) is allocated radially at or beyond a radial extension of said opening (103a,103b,103c).

14. Method for fastening and rotating a workpiece (W) using a chuck arrangement (100), which chuck arrangement (100) is associated with a radial direction (R), an axial direction (A) and an angular direction (V) about said axial direction (A), which method comprises the following steps:
a) arranging the chuck arrangement (100) into an assembled state, in which at least three chuck jaws (110,120,130) of the chuck arrangement (100) are radially displaceable;
b) radially displace said chuck jaws (110,120,130) into said respective clamping position, in which respective clamping position each respective chuck jaw (110,120,130) applies a radial clamping force onto the workpiece (W) so that the workpiece (W) is held by the chuck arrangement (100);
c) radially fixing each of said chuck jaws (110,120,130) in said clamping position using a chuck jaw fixing means (111,121,131); and
d) rotating the chuck arrangement (100) in the angular direction (V), about the axial direction (A),
wherein the method further comprises, for each of said chuck jaws (110,120,130), providing a respective associated counterweight (140,150,160), each of which counterweights (140,150,160), in said assembled state, is mechanically connected to its associated chuck jaw (110,120,130) in question and also associated with a respective centre of gravity (GW) which in turn, in said assembled state, is arranged so that the counterweight (140,150,160) in question, via centripetal forces developed by the counterweight (140,150,160) in question, pulls its associated chuck jaw (110,120,130) in a pull direction having a non-zero component radially towards a centre of rotation of the chuck arrangement (100) as the chuck arrangement (100) rotates in the angular direction (V) in step d), **characterised in that** the method further comprises providing detachable weights (142,152,162) to slots for such detachable weights (142,152,162) arranged in each one of the said counterweights (140,150,160).

15. Method according to claim 14, **characterised in that** the method further comprises selecting, using said detachable weights (142,152,162), a total mass and/or a centre of gravity (GW) of each of said counterweights (140,150,160) so that, in the step d), centripetal forces developed by each of said counterweights (140,150,160) and its respective associated chuck jaw part (110,120,130) substantially balance when the chuck arrangement (100) rotates in the angular direction (V).

## Patentansprüche

1. Spannfutteranordnung (100), die einer radialen Richtung (R), einer axialen Richtung (A) und einer Winkelrichtung (V) zugeordnet ist, in der die Spannfutteranordnung (100) so angeordnet ist, dass sie sich um die axiale Richtung (A) dreht, wobei die Spannfutteranordnung (100) mindestens drei Spannbacken (110, 120, 130) umfasst, die jeweils so angeordnet sind, dass sie in einem montierten Zustand der Spannfutteranordnung (100), angeordnet sind, um radial in eine jeweilige Spannposition verschiebbar zu sein, in der sie eine radiale Spannkraft (C) auf ein Werkstück (W) ausüben, das von der Spannfutteranordnung (100) gehalten wird, und wobei jede Spannbacke (110, 120, 130) ein jeweiliges Spannbackenfixiermittel (111, 121, 131) umfasst, das angeordnet ist, um die Spannbacke (110, 120, 130) in der Spannposition radial zu fixieren, wobei die Spannbacke (110, 120, 130) in der Spannposition radial fixiert wird, wobei die Spannfutteranordnung (100) ferner ein jeweiliges Gegengewicht (140, 150, 160) umfasst, das mit jeder der Spannbacken (110, 120, 130) verbunden ist, wobei jedes der Gegengewichte (140, 150, 160) im zusammengebauten Zustand mechanisch mit der jeweiligen Spannbacke (110, 120, 130) verbunden ist und mit einem jeweiligen Schwerpunkt (GW) verbunden ist, der seinerseits im zusammengebauten Zustand so angeordnet ist, dass das Gegengewicht (140, 150, 160) über Zentripetalkräfte, die von dem betreffenden Gegengewicht (140, 150, 160) entwickelt werden, seine jeweilige zugeordnete Spannbacke (110, 120, 130) in einer Zugrichtung mit einer Komponente ungleich Null radial in Richtung eines Drehzentrums der Spannfutteranordnung (100) zieht, wenn sich die Spannfutteranordnung (100) in der Winkelrichtung (V) dreht,
**dadurch gekennzeichnet, dass**
jedes der genannten Gegengewichte (140, 150, 160) mindestens einen Schlitz für ein abnehmbares Gewicht (142, 152, 162) aufweist.

2. Spannfutteranordnung (100) nach Anspruch 1,
**dadurch gekennzeichnet, dass**
die Schlitze die Form von axial angeordneten, nicht durchgehenden Löchern in den Gegengewichten (140, 150, 160) haben.

3. Spannfutteranordnung (100) nach Anspruch 2,
**dadurch gekennzeichnet, dass**
die nicht durchgehenden Löcher eine jeweilige Öffnung in einer unteren Fläche des jeweiligen Gegengewichts (140, 150, 160) haben, die in dem zusammengebauten Zustand von dem Werkstück (W) weg zeigt.

4. Spannfutteranordnung (100) nach einem der vorhergehenden Ansprüche,
**dadurch gekennzeichnet, dass**
jeder der Schlitze ferner mit Befestigungsmitteln zum Befestigen eines jeweiligen Gewichts (142, 152, 162) in dem betreffenden Schlitz versehen ist.

5. Spannfutteranordnung (100) nach einem der Ansprüche 1 bis 3,
**dadurch gekennzeichnet, dass**
die Spannbacken (110, 120, 130) so angeordnet sind, dass sie die axiale (A) Position der Gegengewichte (140, 150, 160) sichern, dass die Schlitze an einer axialen (A) Unterseite der Gegengewichte (140, 150, 160) angeordnet sind, dass die Gewichte (142, 152, 162) so angeordnet sind, dass sie axial (A) durch eine obere Fläche der Spannfutteranordnung (100), auf der die Gegengewichte (140, 150, 160) ruhen, fixiert werden.

6. Spannfutteranordnung (100) nach Anspruch 5,
**dadurch gekennzeichnet, dass**
die Schlitze nicht mit Befestigungsmitteln versehen sind, um ein entsprechendes Gewicht (142, 152, 152) in dem betreffenden Schlitz zu befestigen.

7. Spannfutteranordnung (100) nach einem der vorhergehenden Ansprüche,
**dadurch gekennzeichnet, dass**
die Schlitze so angeordnet sind, dass durch das Versehen der Schlitze mit den abnehmbaren Gewichten (142, 152, 162) die Masse entlang eines radialen Umfangs der Gegengewichte (140, 150, 160) im zusammengebauten Zustand erhöht wird.

8. Spannfutteranordnung (100) nach einem der vorhergehenden Ansprüche,
**dadurch gekennzeichnet, dass**
jedes Gegengewicht (140, 150, 160) so angeordnet ist, dass es in dem zusammengebauten Zustand lösbar mit seiner jeweiligen zugehörigen Spannbacke (110, 120, 130) in Eingriff gebracht werden kann, beispielsweise über einen Vorsprung (112, 122, 132) der Spannbacke (110, 120, 130), der so angeordnet ist, dass er in ein entsprechendes Loch (143, 153, 163) in dem Gegengewicht (140, 150, 160) eingreift.

9. Spannfutteranordnung (100) nach einem der vorhergehenden Ansprüche,
**dadurch gekennzeichnet, dass**
jede der Spannbacken (110, 120, 130) einer bestimmten, jeweils gegenüberliegenden Spannbackenpaarebene zugeordnet ist, die parallel zur axialen Richtung (A) verläuft und die jeweiligen Schwerpunkte (GC) von zwei anderen Spannbacken (100, 120, 130) umfasst, so dass für jede der Spannbacken (110, 120, 130) und im zusammengebauten Zustand das jeweilige zugehörige Gegengewicht (140, 150, 160) so angeordnet ist, dass es sich von der betreffenden Spannbacke (110, 120, 130) über die Spannbackenpaarebene der betreffenden Spannbacke (110, 120, 130) hinaus und zu einer gegenüberliegenden Seite der Spannbackenpaarebene erstreckt, wo sein Schwerpunkt (GW) angeordnet ist.

10. Spannfutteranordnung (100) nach Anspruch 9,
**dadurch gekennzeichnet,**
die Gegengewichte (140, 150, 160) in dem zusammengebauten Zustand jeweils eine im Wesentlichen radial identische Gewichtsverteilung aufweisen.

11. Spannfutteranordnung (100) nach einem der vorhergehenden Ansprüche,
**dadurch gekennzeichnet, dass**
jede der Spannbacken (110, 120, 130) einen jeweiligen radial verschiebbaren Stütz-Spannbackenteil (113, 123, 133) und einen jeweiligen Spann-Spannbackenteil (114, 124, 134) aufweist, und dass im zusammengebauten Zustand der jeweilige Stütz-Spannbackenteil (113, 123, 133) mechanisch mit dem Gegengewicht (140, 150, 160) verbunden ist, das der betreffenden Spannbacke (110, 120, 130) zugeordnet ist.

12. Spannfutteranordnung (100) nach Anspruch 11,
**dadurch gekennzeichnet, dass**
ein erstes und ein zweites der Gegengewichte (140, 150, 160) so geformt sind, dass sie im zusammengebauten Zustand zusammen eine Öffnung (103a, 103b, 103c) in einer Ebene senkrecht zur axialen Richtung (A) bilden, wobei die Öffnung (103a, 103b, 103c) so angeordnet ist, dass sie ein hinteres Spannbackenteil (112, 123, 133) aufnimmt, das zu einer Spannbacke (110, 120, 130) gehört, die mit einem dritten der Gegengewichte (140, 150, 160) verbunden ist.

13. Spannfutteranordnung (100) nach Anspruch 11,
**dadurch gekennzeichnet, dass**
ein Großteil der Masse des ersten und zweiten Gegengewichts (140, 150, 160) radial auf Höhe oder jenseits einer radialen Ausdehnung der Öffnung (103a, 103b, 103c) angeordnet ist.

14. Verfahren zum Befestigen und Drehen eines Werkstücks (W) unter Verwendung einer Spannfutteranordnung (100), wobei der Spannfutteranordnung (100) eine radiale Richtung (R), eine axiale Richtung (A) und eine Winkelrichtung (V) um die axiale Richtung (A) zugeordnet ist, wobei das Verfahren die folgenden Schritte umfasst:
a) Anordnen der Spannfutteranordnung (100) in einem zusammengebauten Zustand, in dem mindestens drei Spannbacken (110, 120, 130) der Spannfutteranordnung (100) radial verschiebbar sind;
b) radiales Verschieben der Spannbacken (110, 120, 130) in die jeweilige Spannposition, wobei in der jeweiligen Spannposition jede jeweilige Spannbacke (110, 120, 130) eine radiale Spannkraft auf das Werkstück (W) ausübt, so dass das Werkstück (W) von der Spannfutteranordnung (100) gehalten wird;
c) radiales Fixieren jeder der Spannbacken (110, 120, 130) in der Spannposition unter Verwendung eines Spannbackenfixiermittels (111, 121, 131); und
d) Drehen der Spannvorrichtung (100) in der Winkelrichtung (V), um die axiale Richtung (A), wobei das Verfahren ferner umfasst, dass für jede der Spannbacken (110, 120, 130) ein entsprechendes zugehöriges Gegengewicht (140, 150, 160) bereitgestellt wird, wobei jedes der Gegengewichte (140, 150, 160) in dem zusammengebauten Zustand mechanisch mit seiner betreffenden zugehörigen Spannbacke (110, 120, 130) verbunden ist und auch mit einem entsprechenden Schwerpunkt (GW) verbunden ist, der wiederum in dem zusammengebauten Zustand, so angeordnet ist, dass das betreffende Gegengewicht (140, 150, 160) über Zentripetalkräfte, die von dem betreffenden Gegengewicht (140, 150, 160) entwickelt werden, seine zugehörige Spannbacke (110, 120, 130) in einer Zugrichtung mit einer von Null verschiedenen Komponente radial in Richtung eines Drehzentrums der Spannfutteranordnung (100) zieht, wenn sich die Spannfutteranordnung (100) in der Winkelrichtung (V) in Schritt d) dreht,
**dadurch gekennzeichnet, dass**
das Verfahren ferner das Anbringen von abnehmbaren Gewichten (142, 152, 162) in Schlitzen für solche abnehmbaren Gewichte (142, 152, 162) umfasst, die in jedem der Gegengewichte (140, 150, 160) angeordnet sind.

15. Verfahren nach Anspruch 14,
**dadurch gekennzeichnet, dass**
das Verfahren ferner das Auswählen, unter Verwendung der abnehmbaren Gewichte (142, 152, 162), einer Gesamtmasse und/oder eines Schwerpunkts (GW) jedes der Gegengewichte (140, 150, 160) umfasst, so dass in dem Schritt d) die Zentripetalkräfte, die von jedem der Gegengewichte (140, 150, 160) und seinem jeweiligen zugehörigen Spannbackenteil (110, 120, 130) entwickelt werden, sich im Wesentlichen ausgleichen, wenn sich die Spannfutteranordnung (100) in der Winkelrichtung (V) dreht.

## Revendications

1. Agencement à mandrin (100) associé à une direction radiale (R), une direction axiale (A) et une direction angulaire (V) dans lequel l'agencement à mandrin (100) est agencé pour tourner autour de ladite direction axiale (A), lequel agencement à mandrin (100) comprend au moins trois mors de mandrin (110, 120, 130), agencés chacun pour être agencés, dans un état assemblé dudit agencement à mandrin (100), pour pouvoir se déplacer radialement dans une position de serrage respective où ils appliquent une force de serrage radiale (C) à une pièce à usiner (W) qui est maintenue par l'agencement à mandrin (100), et dans lequel chaque mors de mandrin (110, 120, 130) comprend un moyen de fixation de mors de mandrin (111, 121, 131) respectif agencé pour fixer radialement le mors de mandrin (110, 120, 130) dans ladite position de serrage, dans lequel l'agencement à mandrin (100) comprend en outre un contrepoids (140, 150, 160) respectif associé à chacun desdits mors de mandrin (110, 120, 130), chacun de ces contrepoids (140, 150, 160), dans ledit état assemblé, étant connecté mécaniquement au mors de mandrin (110, 120, 130) en question dans ledit état assemblé, et associé à un centre de gravité (GW) respectif qui à son tour, dans ledit état assemblé, est agencé de sorte que le contrepoids (140, 150, 160), via des forces centripètes développées par le contrepoids (140, 150, 160) en question, tire son mors de mandrin (110, 120, 130) associé respectif dans une direction de traction ayant une composante non nulle radialement vers un centre de rotation de l'agencement à mandrin (100), à mesure que l'agencement à mandrin (100) tourne dans la direction angulaire (V), **caractérisé en ce que** chacun desdits contrepoids (140, 150, 160) comprend au moins une fente pour un poids (142, 152, 162) détachable.

2. Agencement à mandrin (100) selon la revendication 1, **caractérisé en ce que** lesdites fentes sont sous la forme de trous non traversants agencés axialement dans lesdits contrepoids (140, 150, 160).

3. Agencement à mandrin (100) selon la revendication 2, **caractérisé en ce que** lesdits trous non traversants ont une ouverture respective dans une face inférieure du contrepoids (140, 150, 160) respectif, tournée à l'opposé de la pièce à usiner (W) dans ledit état assemblé.

4. Agencement à mandrin (100) selon l'une quelconque des revendications précédentes, **caractérisé en ce que** chacune desdites fentes est en outre agencée avec des moyens de fixation pour monter un poids (142, 152, 162) respectif dans la fente en question.

5. Agencement à mandrin (100) selon l'une quelconque des revendications 1 à 3, **caractérisé en ce que** lesdits mors de mandrin (110, 120, 130) sont agencés pour fixer la position axiale (A) desdits contrepoids (140, 150, 160), **en ce que** lesdites fentes sont agencées sur une sous-face axiale (A) des contrepoids (140, 150, 160), **en ce que** lesdits poids (142, 152, 162) sont agencés pour être fixés axialement (A) par une surface d'agencement à mandrin (100) supérieure sur laquelle reposent les contrepoids (140, 150, 160).

6. Agencement à mandrin (100) selon la revendication 5, **caractérisé en ce que** les fentes ne sont pas pourvues de moyens de fixation pour monter un poids (142, 152, 162) respectif dans la fente en question.

7. Agencement à mandrin (100) selon l'une quelconque des revendications précédentes, **caractérisé en ce que** lesdites fentes sont agencées de sorte que, en dotant les fentes desdits poids (142, 152, 162) détachables, la masse est augmentée le long d'une périphérie radiale des contrepoids (140, 150, 160) dans ledit état assemblé.

8. Agencement à mandrin (100) selon l'une quelconque des revendications précédentes, **caractérisé en ce que** chaque contrepoids (140, 150, 160) est agencé pour, dans ledit état assemblé, se mettre en prise de manière détachable avec son mors de mandrin (110, 120, 130) associé respectif, comme via un sprint (112, 122, 132) du mors de mandrin (110, 120, 130) agencé pour se mettre en prise avec un trou (143, 153, 163) correspondant dans le contrepoids (140, 150, 160).

9. Agencement à mandrin (100) selon l'une quelconque des revendications précédentes, **caractérisé en ce que** chacun desdits mors de mandrin (110, 120, 130) est associé à un certain plan de paire de mandrins opposés respectifs, allant parallèlement à la direction axiale (A) et comprenant les centres de gravité (GC) respectifs de deux autres mors de mandrin (110, 120, 130), **en ce que**, pour chacun desdits mors de mandrin (110, 120, 130) et dans ledit état assemblé, le contrepoids (140, 150, 160) associé respectif est agencé pour s'étendre à partir du mors de mandrin (110, 120, 130) en question, après le plan de paire de mors de mandrin du mors de mandrin (110, 120, 130) en question, et vers un côté opposé dudit plan de paire de mors de mandrin où son centre de gravité (GW) est agencé.

10. Agencement à mandrin (100) selon la revendication 9, **caractérisé en ce que**, dans ledit état assemblé, lesdits contrepoids (140, 150, 160) ont des repartions de poids respectifs qui sont sensiblement identiques radialement.

11. Agencement à mandrin (100) selon l'une quelconque des revendications précédentes, **caractérisé en ce que** chacun desdits mors de mandrin (110, 120, 130) comprend une partie de mors de mandrin de soutien (113, 123, 133) respective déplaçable radialement et une partie de mors de mandrin de serrage (114, 124, 134) respective, et **en ce que**, dans ledit état assemblé, la partie de mors de mandrin de soutien (113, 123, 133) respective est connectée mécaniquement au contrepoids (140, 150, 160) associé au mors de mandrin (110, 120, 130) en question.

12. Agencement à mandrin (100) selon la revendication 11, **caractérisé en ce qu'**un premier et un deuxième desdits contrepoids (140, 150, 160) sont formés de sorte que, dans ledit état assemblé, ils forment ensemble une ouverture (103a, 103b, 103c) dans un plan perpendiculaire à la direction axiale (A), laquelle ouverture (103a, 103b, 103c) est agencée pour recevoir une partie de mors de mandrin de soutien (112, 123, 133) appartenant à un mors de mandrin (110, 120, 130) associé à un troisième un desdits contrepoids (140, 150, 160).

13. Agencement à mandrin (100) selon la revendication 12 **caractérisé en ce qu'**une majorité de la masse desdits premier et deuxième contrepoids (140, 150, 160) est attribuée radialement au niveau ou au-delà d'une extension radiale de ladite ouverture (103a, 103b, 103c).

14. Procédé de fixation et de rotation d'une pièce à usiner (W) à l'aide d'un agencement à mandrin (100), lequel agencement à mandrin (100) est associé à une direction radiale (R), une direction axiale (A) et une direction angulaire (V) autour de ladite direction axiale (A), lequel procédé comprend les étapes suivantes :
a) agencer l'agencement à mandrin (100) dans un état assemblé, dans lequel au moins trois mors de mandrin (110, 120, 130) de l'agencement à mandrin (100) sont déplaçables radialement ;
b) déplacer radialement lesdits mors de mandrin (110, 120, 130) dans ladite position de serrage respective dans laquelle une position de serrage respective de chaque mors de mandrin (110, 120, 130) respectif applique une force de serrage radiale sur la pièce à usiner (W) de sorte que la pièce à usiner (W) soit maintenue par l'agencement à mandrin (100) ;
c) fixer radialement chacun desdits mors de mandrin (110, 120, 130) dans ladite position de serrage à l'aide d'un moyen de fixation de mors de mandrin (111, 121, 131) ; et
d) faire tourner l'agencement à mandrin (100) dans la direction angulaire (V), autour de la direction axiale (A),
dans lequel le procédé comprend en outre, pour chacun desdits mors de mandrin (110, 120, 130), la fourniture d'un contrepoids (140, 150, 160) associé respectif, chacun de ces contrepoids (140, 150, 160), dans ledit état assemblé, étant connecté mécaniquement à son mors de mandrin (110, 120, 130) associé en question, et étant également associé à un centre de gravité (GW) respectif qui à son tour, dans ledit état assemblé, est agencé de sorte qu'à mesure que l'agencement à mandrin (100) tourne dans la direction angulaire (V) à l'étape d), le contrepoids (140, 150, 160) en question tire radialement vers un centre de rotation de l'agencement à mandrin (100) son mors de mandrin (110, 120, 130) associé dans une direction de traction ayant une composante non nulle, via des forces centripètes développées par le contrepoids (140, 150, 160) en question, **caractérisé en ce que** le procédé comprend en outre la fourniture de poids (142, 152, 162) détachables à des fentes pour ces poids (142, 152, 162) détachables agencées dans chacun desdits contrepoids (140, 150, 160).

15. Procédé selon la revendication 14, **caractérisé en ce que** le procédé comprend en outre la sélection, à l'aide desdits poids (142, 152, 162) détachables, d'une masse totale et/ou d'un centre de gravité (GW) de chacun desdits contrepoids (140, 150, 160) de sorte qu'à l'étape d), des forces centripètes développées par chacun desdits contrepoids (140, 150, 160) et sa partie de mors de mandrin (110, 120, 130) respective associée s'équilibrent sensiblement lorsque l'agencement à mandrin (100) tourne dans la direction angulaire (V).
